# EUROPÄISCHE PATENTSCHRIFT

(11) **EP 1 452 058 B1**
(45) Veröffentlichungstag und Bekanntmachung des Hinweises auf die Patenterteilung: **27.09.2006**
(21) Anmeldenummer: 02779207.6
(22) Anmeldetag: 08.11.2002
(51) Int. Cl.: H04Q 7/38

(54) **VERFAHREN ZUR ZUWEISUNG VON ÜBERTRAGUNGSKANÄLEN IN EINER MOBILFUNKZELLE FÜR EINEN MULTICAST-DIENST**
METHOD FOR ALLOCATING TRANSMISSION CHANNELS IN A MOBILE RADIO CELL FOR A MULTICAST SERVICE
PROCEDE D'AFFECTATION DE CANAUX DE TRANSMISSION DANS UNE CELLULE DE TELEPHONIE MOBILE POUR UN SERVICE DE MULTIDIFFUSION

(30) Priorität: 05.12.2001 DE 10159637
(43) Veröffentlichungstag der Anmeldung: 01.09.2004
(73) Patentinhaber: SIEMENS AKTIENGESELLSCHAFT, 80333 München (DE)
(72) Erfinder: BECKMANN, Mark, 38124 Braunschweig (DE); ECKERT, Michael, 38122 Braunschweig (DE); HANS, Martin, 31139 Hildesheim (DE); OTTE, Andreas, 29227 Celle (DE)
(86) Internationale Anmeldenummer: PCT/DE2002/004138
(87) Internationale Veröffentlichungsnummer: WO 2003/055256

(56) Entgegenhaltungen:
- EP-A- 1 006 692
- EP-A- 1 206 072
- WO-A-00/35225
- "Universal Mobile Telecommunications System (UMTS); Radio Interface for Broadcast/Multicast Services Radio Interface for Broadcast/Multicast Services (3GPP TR 25.925 version 3.4.0 Release 1999)" ETSI TR 125 925 V3.4.0 (2001-03), [Online] März 2001 (2001-03), Seiten 6-30, XP002228415 Gefunden im Internet: <URL:http://WEBAPP.ETSI.ORG/exchangefolder /tr_125925v030400p.pdf> [gefunden am 2003-01-23]

## Beschreibung

Die Erfindung bezieht sich auf ein Verfahren zur Zuweisung von physikalischen Übertragungskanälen in einer Mobilfunkzelle, in der sich eine Basisstation, die mit einem Knoten eines Mobilkommunikationsnetzes verbunden ist, und eine Mehrzahl mobiler Endgeräte befinden, wobei in sämtlichen mobilen Endgeräten und in dem Knoten des Mobilkommunikationsnetzes die UMTS-Protokollarchitektur für wenigstens die Schicht 2 und die Schicht 3 des UMTS-Schichten-Modells verwirklicht ist, und von der Basisstation der Mobilfunkzelle aus bei wenigstens einer Gruppe der mobilen Endgeräte für jedes mobile Endgerät der jeweils für einen Multicast-Dienst zu verwendende physikalische Übertragungskanal signalisiert wird.

Ein solches Verfahren ist beispielsweise aus der WO 00/35225 A1 bekannt. Weiterer relevanter Stand der Technik ist das Standard-Dokument "ETSI TR 125 925 V3.4.0 (2001-03) mit dem Titel "Universal Mobile Telecommunications System (UMTS); Radio Interface for Broadcast/Multicast Services (3GPP TR 25.925 version 3.4.0 Release 1999). Besonders hinzuweisen ist auf den dortigen Abschnitt 6.3.5.1, der sich auf Funktionen der RRC-Instanz auf der UTRAN-Seite bezieht und auch auf die Verbreitung von Systeminformationen im Rahmen eines Broadcast-Dienstes eingeht.

Zur Erläuterung des oben angegebenen, bekannten Verfahrens wird auf die UMTS-Protokollarchitektur der Schicht 2 und der unteren Schicht 3 Bezug genommen. In diesem Zusammenhang wird auf die Literaturstelle 3 GPP TS 25.301, "Radio Interface Protocol Architecture", verwiesen. Die Protokollarchitektur umfasst die Protokolle der UMTS-Luftschnittstelle und liegt sowohl in einem mobilen Endgerät als auch in einem Knoten des Mobilkommunikationsnetzes ("RNC") vor, d. h. jedes der Protokolle existiert einmal im mobilen Endgerät ("UE") und einmal im Knoten des Mobilkommunikationsnetzes.

Gleiche Protokolle tauschen Protokoll-Dateneinheiten ("PDU") aus, indem sie die Dienste der unter ihnen angeordneten Protokollschichten für den Transport der Protokoll-Dateneinheiten benutzen. Jede Protokollschicht bietet der über ihr liegenden Protokollschicht ihre Dienste an sog. Dienstzugangspunkten an. Diese Dienstzugangspunkte werden zum besseren Verständnis der Protokollarchitektur mit allgemein gebräuchlichen und eindeutigen Namen versehen, beispielsweise "logische Kanäle", "Transportkanäle", "Radio Bearer". Für den Datentransfer nehmen Protokolle an ihren Dienstzugangspunkten Dienst-Dateneinheiten ("SDU") auf und gegeben daraus erzeugte Protokoll-Dateneinheiten an die unter ihnen liegende Schicht ab, so dass Protokoll-Dateneinheiten von einer bestimmten Protokollschicht somit identisch mit den Dienst-Dateneinheiten der darunter liegenden Schicht sind.

In einem mobilen Endgerät für UMTS können Daten von verschiedenen Applikationen erzeugt werden. Diese Daten werden zunächst eventuell von Protokollen höherer Schichten modifiziert und für den Datentransfer in verschiedenen Netzen vorbereitet. Für den Transport über die UMTS-Luftschnittstelle müssen diese Daten in den verschiedenen Protokollen der Schicht 2 (PDCP, RLC und MAC) optimiert werden. Der Dienstzugangspunkt, an dem nicht-UMTS-spezifische Protokolle den Übertragungsdienst der UMTS-Luftschnittstelle nutzen können, wird Radio Bearer ("RB") genannt.

Es ist eine Aufgabe des RLC-Protokolls, den Datenstrom in Pakete zu teilen oder zusammenzufügen, die eine für die Luftschnittstelle optimale Länge aufweisen. Darüber hinaus speichert die RLC-Protokollschicht an einem Radio Bearer anliegende Daten so lange in einem RLC-Puffer, bis sie von Schichten unterhalb der RLC-Protokollschicht über die Luftschnittstelle transportiert werden können. Die RLC-Protokollschicht hat weitere Aufgaben, insbesondere, eine Fehlerkorrektur herbeizuführen.

Die RLC-Protokollschicht übergibt die entstandenen RLC-Protokoll-Dateneinheiten der MAC-Schicht zur weiteren Übertragung. Die RLC-Protokollschicht ist dabei so ausgebildet, dass es eine gesonderte RLC-Entität pro Radio Bearer gibt.

Die Dienstzugangspunkte, an denen die MAC-Protokollschicht ihre Dienste anbietet, werden "logische Kanäle" genannt. Es gibt pro Radio Bearer genau eine RLC-Entität und sowohl für die Aufwärts- als auch für die Abwärtsrichtung entweder einen oder zwei logische Kanäle. Logische Kanäle unterscheiden sich durch die Art der Daten, die auf ihnen übertragen werden.

Die Aufgabe der MAC-Protokollschicht im Sender einer Basisstation einer Mobilfunkzelle ist es, die Daten, die an einem logischen Kanal oberhalb der MAC-Protokollschicht anliegen, auf die Transportkanäle der physikalischen Schicht abzubilden, bzw. im Empfänger auf Transportkanälen empfangene Daten auf logische Kanäle zu verteilen. Jeder Transportkanal ist üblicher Weise dazu mit einem Satz von festen Parametern für die Übertragung der Daten vorkonfiguriert. Aus einem weiteren Satz variabler Parameter kann die MAC-Protokollschicht die jeweils für die aktuelle Übertragung günstigsten Parameter aussuchen und so die Datenübertragung dynamisch beeinflussen. Eine gültig Einstellung aller Parameter für einen Transportkanal wird "Transportformat" ("TF") genannt. Die Menge aller möglichen Einstellungen für einen bestimmten Transportkanal heißt "Transportformatsatz" ("TFS"). Innerhalb eines Transportformatsatzes variieren für den betreffenden Transportkanal nur die variablen bzw. dynamischen Parameter des Transportformats. Zu einem bestimmten Zeitpunkt ist für jeden einzelnen Transportkanal nur ein Transportformat eingestellt. Die Menge der zu einem bestimmten Zeitpunkt für alle vorhandenen Transportkanäle eingestellten Transportformate wird als "Transportformatkombination" ("TFC") bezeichnet. Aus den für jeden Transportkanal gültigen Transportformaten ergibt sich eine große Vielzahl möglicher Kombinationen für sämtliche Transportkanäle. Theoretisch kann jede dieser Kombinationen eine Transportformatkombination ergeben. In der Praxis ist jedoch die Anzahl der tatsächlich erlaubten Kombinationen von Transportformaten eingeschränkt. Die Menge aller erlaubten Transportformatkombinationen für eine Anzahl Transportkanäle wird als "Transportformatkombinationssatz" ("TFCS") bezeichnet. Innerhalb eines Transportformatsatzes können einzelne Transportformate über einen Index, den sog. "Transportformatidentifikator" ("TFI") referenziert werden. Ähnliches gilt auch für einen Transportformatkombinationssatz, wobei der in diesem Zusammenhang verwendete Index, der eine bestimmte Transportformatkombination eindeutig angibt, als "Transportformatkombinationsidentifikator" ("TFCI") bezeichnet wird.

Für den Aufbau, den Abbau und die Umkonfiguration von Transportkanälen und Radio Bearer und die Aushandlung aller Parameter der Protokolle der Schicht 2 ist das RRC-Protokoll maßgeblich. Dieses Protokoll ist sowohl im mobilen Endgerät als auch in dem Knoten des Mobilkommunikationsnetzes vorhanden. Es nutzt die Übertragungsdienste, welche die RLC-Schicht zur Verfügung stellt, also die logischen Kanäle, um RRC-Nachrichten zu versenden. Mit den zwischen den RRC-Protokollen ausgehandelten Übertragungs-Parametern werden dann die verschiedenen Protokolle der Schicht 2 konfiguriert. Beispielsweise kann für jeden Transportkanal beim Aufbau oder der Umkonfiguration zwischen den RRC-Protokollen des mobilen Endgerätes einerseits und des Knotens des Mobilkommunikationsnetzwerkes andererseits ein Transportformatsatz ausgehandelt werden, wonach der für alle Transportkanäle gültige Transportformatkombinationssatz übertragen wird. Dieser Transportformatkombinationssatz wird somit der MAC-Protokollschicht von der RRC-Protokollschicht vorgegeben. Die MAC-Schicht kann dann für die betreffenden Transportkanäle aus dem Transportformatkombinationssatz eine bestimmte Transportformatkombination auswählen. Die MAC-Protokollschicht teilt der Bit-Übertragungsschicht die Wahl eines Transportformates für einen bestimmten Transportkanal mit, in dem sie den entsprechenden Transportformatidentifikator übermittelt.

Das innerhalb der Bit-Übertragungsschicht erfolgende Multiplexen, Kodieren und Punktieren erfolgt nach einer durch eine Transportformatkombination eindeutig festgelegten Weise. Daher wird beispielsweise von dem Knoten des Mobilkommunikationsnetzes aus einem mobilen Endgerät der Index der aktuellen Transportformatkombination übermittelt. Hierzu schließt die Bit-Übertragungsschicht aus den Transportformatidentifikatoren, die von der MAC-Protokollschicht übertragen werden, welche bestimmte Transportformatkombination gerade gewählt wurde und überträgt über einen jeweiligen physikalischen Kanal den Transportformatkombinationsidentifikator, aus dem dann auf der jeweiligen Empfängerseite die einzelnen Transportformatidentifikatoren und damit die Transportformate rekonstruiert werden können. Für eine noch detailliertere Beschreibung der funktionellen Zusammenhänge im Hinblick auf die UMTS-Protokollarchitektur wird auf das Fachbuch "Mobilfunknetze und Ihre Protokolle, Grundlagen, GSM, UMTS und andere zellulare Mobilfunknetze", Band 1, dritte Auflage, von B. Walke, August 2001, erschienen im Verlag B. G. Teubner, dort insbesondere die Kapitel 5.8 und 5.9, verwiesen.

Zur Bereitstellung eines Multicast-Dienstes wird, ausgehend von den vorstehend beschriebenen funktionellen Zusammenhängen, wie folgt vorgegangen: Als Ressourcen für die Versendung von Multicast-Nachrichten dienen gemeinsame physikalische Kanäle der Abwärtsrichtung (im Gegensatz zu dedizierten Kanälen der Abwärtsrichtung, die bestimmten mobilen Endgeräten zugeordnet sind). Jedem mobilen Endgerät ist ein dedizierter physikalischer Kanal der Abwärtsstrecke (DL DPCH) zugeordnet, über den der aktuelle Transportformatkombinationsidentifikator von dem Knoten des Mobilkommunikationsnetzes über die Basisstation an ein mobiles Endgerät übermittelt wird. Der Transportformatkombinationsidentifikator beinhaltet Informationen, die zum einen die physikalischen Ressourcen in Form von gemeinsamen physikalischen Kanälen der Abwärtsstrecke und zum anderen die Transportformatkombination für die gemeinsamen physikalischen Kanäle der Abwärtsstrecke angeben.

Dazu wird beispielsweise beim Aufbau eines Radio Bearers einem mobilen Endgerät mitgeteilt, welche gemeinsamen physikalischen Kanäle der Abwärtsstrecke einem bestimmten Wert für den Transportformatkombinationsidentifikator zugeteilt sind und welche Transportformatkombination dem Transportformatkombinationsidentifikator zu geordnet ist.

Wenn nun einem mobilen Endgerät ein gemeinsamer Transportkanal der Abwärtsstrecke zugewiesen wurde, so empfängt dieses in jedem Zeitrahmen (Frame) den zugehörigen gemeinsamen physikalischen Kanal der Abwärtsstrecke. Das mobile Endgerät wertet innerhalb des Zeitrahmens, der Nutzdaten und den Transportformatkombinationsidentifikator umfasst, das Feld für den Transportformatkombinationsidentifikator aus, das auf diesem Kanal übertragen wurde. Anhand dieser Information entscheidet das mobile Endgerät, ob und auf welche gemeinsamen physikalischen Kanäle der Abwärtsstrecke als Ressourcen es im nächsten Zeitrahmen hören muss.

Bei diesem Verfahren zur Zuweisung von Ressourcen zu mobilen Endgeräten in einer Mobilfunkzelle wird es als nachteilig angesehen, das jedem einzelnen mobilen Endgerät gesondert mitgeteilt werden muss, welche Ressourcen in Form von gemeinsamen physikalischen Kanälen der Abwärtsstrecke es für einen Multicast-Dienst benutzen soll.

Ausgehend hiervon liegt der Erfindung die Aufgabe zugrunde, ein Verfahren der eingangs genannten Art anzugeben, bei dem die Zuweisung physikalischer Übertragungskanäle in einer Mobilfunkzelle für einen Multicast-Dienst effizienter gestaltet werden kann.

Diese Aufgabe wird bei dem eingangs genannten Verfahren durch die kennzeichnenden Merkmale des Anspruchs 1 gelöst. Abweichend vom Stand der Technik wird nach dem Verfahren nicht jedem mobilen Endgerät einzeln mitgeteilt, welche physikalische Ressourcen in Form von physikalischen Übertragungskanälen es für einen Multicast-Dienst zu verwenden hat. Vielmehr erfolgt die Signalisierung der Zuweisung in vorteilhafter Weise über einen allgemeinen physikalischen Kanal der Abwärtsstrecke, besonders bevorzugt über den für das UMTS-definierten Kanal S-CCPCH.

Sämtliche weiteren, für die Handhabung von Multicast-Nachrichten erforderlichen Informationen sind jedem mobilen Endgerät aus anderer Quelle vorab bekannt, wobei insbesondere die üblicher Weise periodisch ausgesandten Systeminformationen die erforderlichen Informationen enthalten können. Im Einzelnen muss jedes mobile Endgerät aufgrund beispielsweise der Systeminformationen in die Lage versetzt werden, nach Erhalt einer Mitteilung über den allgemeinen physikalischen Kanal, welcher physikalische Kanal für einen Multicast-Dienst zu benutzen ist, die erforderlichen Konfigurationseinstellungen für eine zu treffende Verarbeitung einer empfangenen Multicast-Nachricht vorzunehmen. Dazu gehört beispielsweise die Einstellung auf den zu benutzenden physikalischen Übertragungskanal und die von dem Knoten des Mobilkommunikationsnetzes vorgegebenen Transportformate.

Die Signalisierungszuweisung eines physikalischen Übertragungskanals zu einem der mobilen Endgeräte kann für sämtliche mobilen Endgeräte in der Mobilfunkzelle vorgenommen werden. Es ist jedoch auch möglich, dass die Signalisierung nur an solche mobilen Endgeräten erfolgt, die zu einer Gruppe gehören, die für die Nutzung eines Multicast-Dienstes befähigt sind. Dazu können die Systeminformationen einen Code zur Identifizierung der Gruppe der mobilen Endgeräte als Multicast-Gruppe enthalten. Dies kann insofern ausgenutzt werden, als über den allgemeinen physikalischen Kanal zur Signalisierung der Zuweisung eines physikalischen Übertragungskanals für Multicast-Nachrichten ein für die Multicast-Gruppe spezifischer Code übermittelt wird, mit dem jedes mobiles Endgerät feststellen kann, ob eine zu erwartende Multicast-Nachricht für das mobile Endgerät bestimmt ist.

Gemäß der Erfindung ist vorgesehen, dass über den allgemeinen physikalischen Kanal periodisch ein fortlaufend aktualisierter Transportformatkombinationsidentifikator an die Gruppe der mobilen Endgeräte übertragen wird, der angibt, welche Transportkanäle mit welcher Transportformatkombination auf den allgemeinen physikalischen Kanal abgebildet werden, welches mobile Endgerät welchen physikalischen Übertragungskanal für den Multicast-Dienst nutzen soll und welche Transportkanäle mit welcher Transportformatkombination auf den jeweiligen physikalischen Übertragungskanal abgebildet werden.

Insofern wird der oben erläuterte Transportformatkombinationsidentifikator des allgemeinen physikalischen Kanals zur Zuweisung physikalischer Übertragungskanäle für Multicast-Nachrichten verwendet, um Übertragungskanäle für Multicast-Nachrichten verwendet, um die erforderlichen, aktuellen Signalisierungen für die mobilen Endgeräte in einer Mobilfunkzelle vorzunehmen. Insbesondere kann der Transportformatkombinationsidentifikator aufgeteilt sein und einen ersten Datenteil, der einen Transportformatkombinationsidentifikator für die auf den allgemeinen physikalischen Kanal abgebildeten Transportkanäle enthält, und einen zweiten Datenteil aufweisen, der einen Transportformatkombinationsidentifikator für die auf den physikalischen Übertragungskanal abgebildeten Transportkanälen und einem Code zur Identifizierung des von einem jeweiligen mobilen Endgeräts benutzten physikalischen Übertragungskanals enthält.

Somit umfasst der zweite Datenteil des Transportformatkombinationsidentifikators die erforderlichen Signalisierungen für die mobilen Endgeräte im Hinblick auf die Zuweisung der Ressourcen, einschließlich der Transportformatinformation, die ein mobiles Endgerät benötigt, um eine auf dem zugewiesenen physikalischen Übertragungskanal empfangene Multicast-Nachricht weiterverarbeiten zu können.

Die Aufteilung des Transportformatkombinationsidentifikators auf den ersten Datenteil und den zweiten Datenteil kann entweder fest oder variabel sein. Im ersteren Fall können jedem mobilen Endgerät in einer Mobilfunkzelle über die Systeminformationen Angaben über die Anzahl der Bits, die den allgemeinen physikalischen Kanal zur Signalisierung betreffen, und die Anzahl der Bits, die die Signalisierung selbst betreffen, übermittelt werden. Bei Variabler Aufteilung des Transportformatkombinationsidentifikators kann der zweite Datenteil eine Information darüber enthalten, wie die Bitaufteilung auf den ersten Datenteil und den zweiten Datenteil gewählt ist.

Günstiger Weise wird der allgemeine physikalische Kanal zur Signalisierung der Ressourcen zeitlich vor den physikalischen Übertragungskanälen für Multicast-Nachrichten gesendet. Auf diese Weise können die von den Multicast-Nachrichten betroffenen mobilen Endgeräte vor Empfang der physikalischen Übertragungskanäle die erforderlichen Konfigurationen für ihre Protokollschichten vornehmen.

Das erfindungsgemäße Verfahren gestattet es, Zeitrahmen für Zeitrahmen die Zuweisung von Ressourcen für einen Multicast-Dienst zu mobilen Endgeräten innerhalb einer Mobilfunkzelle zur aktualisieren. Dies ist insbesondere bei kurzen Übertragungen, kleinen Datenmengen und bei büschelhaften Datenaufkommen vorteilhaft.

Vorteilhafter Weise sind in der Bit-Übertragungsschicht die dem allgemeinen physikalischen Kanal zugeordneten Transportkanäle in einem ersten Bündel und die den physikalischen Übertragungskanälen zugeordneten Transportkanäle in einem zweiten Bündel zusammengefasst. In diesem Zusammenhang wird darauf verwiesen, dass es innerhalb der Bit-Übertragungsschicht einen internen Kanal gibt, der mit "CCTrCH" bezeichnet wird. Dieser Kanal wird auf einen oder mehrere physikalische Kanäle abgebildet.

Es kann vorgesehen sein, dass nur mobile Endgeräte den allgemeinen physikalischen Kanal zur Signalisierung von Zuweisungen von Ressourcen mit dem geteilten Transportformatkombinationsidentifikator verwenden, die zu einer Multicast-Gruppe gehören. Dies hat den Vorteil, dass mobile Endgeräte, die nicht zu einer Multicast-Gruppe gehören, oder auch nicht fähig sind, Multicast-Dienste zu empfangen, die Aufteilung des Transportformatkombinationsidentifikators nicht beachten müssen.

Nachfolgend werden beispielhafte Ausführungsformen der Erfindung anhand der Zeichnungen beschrieben. Es zeigen:
Figur 1 eine Blockdiagramm-Darstellung zur Veranschaulichung von Zustandsübergängen eines mobilen Endgerätes im Zusammenhang mit dem Empfang einer Multicast-Nachricht,
Figur 2 eine schematische Darstellung einer Mobilfunkzelle, in der sich eine Mehrzahl mobiler Endgeräte befindet, in Kombination mit einem Knoten eines Mobilkommunikationsnetzes,
Figur 3 einen Ausschnitt aus einer UMTS-Protokollarchitektur, und
Figur 4 eine schematische Darstellung des zeitlichen Ablaufs von Zeitrahmen für einen allgemeinen physikalischen Kanal zur Zuweisung von Ressourcen und einen Übertragungskanal für Multicast-Nachrichten.

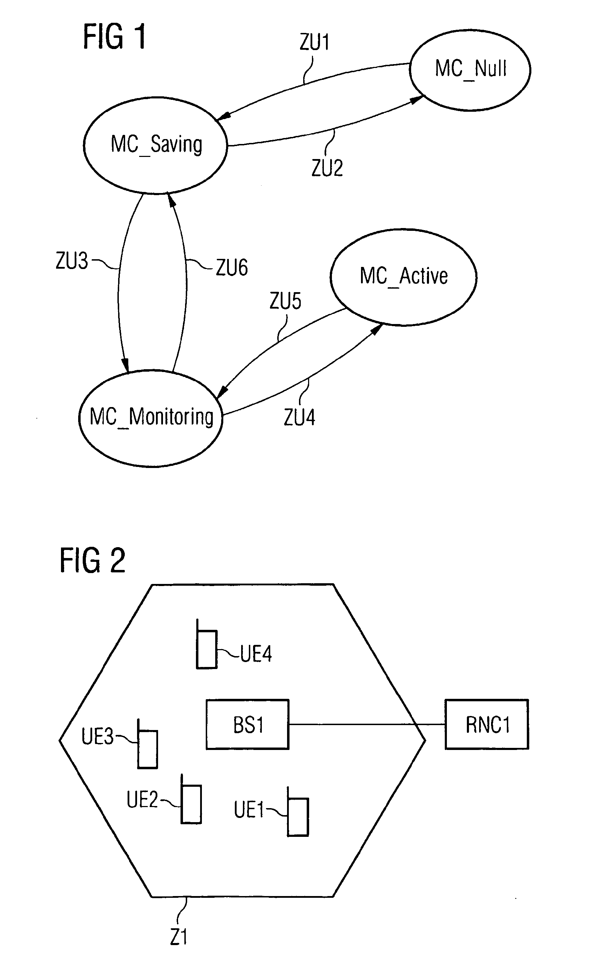

Im Zusammenhang mit dem Empfangen von Multicast-Nachrichten auf einem physikalischen Kanal liegt bei einem mobilen Endgerät zu einem bestimmten Zeitpunkt einer von insgesamt vier Zuständen vor, die in der Figur 1 mit den Bezugszeichen MC_0, MC_Saving, MC_Monitoring und MC_Active bezeichnet sind. Der erste Zustand MC_0 ist dadurch charakterisiert, dass das betreffende mobile Endgerät keiner Multicast-Gruppe angehört. Auch versucht das Mobilkommunikationsnetzwerk nicht, das mobile Endgerät zu benachrichtigen, wenn eine Multicast-Nachricht zur Übertragung von einem Knoten des Mobilkommunikationsnetzwerkes zu dem mobilen Endgerät vorliegt.

Der zweite Zustand MC_Saving des mobilen Endgerätes ist dadurch definiert, dass das mobile Endgerät einer Multicast-Gruppe angehört, dass das mobile Endgerät Broadcast-Nachrichten ausliest, dass das mobile Endgerät auf die Benachrichtigungskanäle PICH und PCH hört, und dass das Mobilkommunikationsnetzwerk das mobile Endgerät über die Benachrichtigungskanäle PICH und PCH benachrichtigt, wenn eine Multicast-Nachricht zur Übertragung vorliegt. Der zweite Zustand MC_Saving entspricht den für UMTS definierten RRC-Zuständen Idle Mode, Cell_PCH und URA_PCH.

Der dritte Zustand MC_Monitoring des mobilen Endgerätes ist dadurch charakterisiert, dass das Endgerät einer Multicast-Gruppe angehört, eine Signalisierungsverbindung zwischen dem mobilen Endgerät und dem Knoten des Mobilkommunikationsnetzwerkes RNC besteht und das mobile Endgerät in jedem Zeitrahmen den Transportformatkombinationsidentifikator empfängt und analysiert, der auf einem für Mulitcast-Signalisierungen konfigurierten allgemeinen physikalischen Kanal S-CCPCH übertragen wird.

Der dritte Zustand MC_Monitoring entspricht dem RRC-Zustand CELL_Fach oder CELL_DCH.

Der vierte Zustand MC_Active des mobilen Endgerätes ist dadurch gekennzeichnet, dass das mobile Endgerät einer Multicast-Gruppe angehört und das mobile Endgerät Multicast-Nachrichten auf den physikalischen Kanälen empfängt, die in einem Zeitrahmen zuvor durch den Transportformatkombinationsidentifikator des allgemeinen physikalischen Kanals S-CCPCH der Multicast-Gruppe zugewiesen wurden.

Zwischen den vier Zuständen MC_0, MC_Saving, MC_Monitoring und MC_Active des mobilen Endgerätes können insgesamt sechs Zustandsübergänge ZU1, ZU2, ZU3, ZU4, ZU5 und ZU6 stattfinden, die nachfolgend im einzelnen erläutert werden:

Bei dem Zustandsübergang ZU1 von dem ersten Zustand MC_0 zu dem zweiten Zustand MC_Saving meldet sich das mobile Endgerät an eine erste Multicast-Gruppe an. Der Knoten des Mobilkommunikationsnetzwerkes RNC1 teilt dem mobilen Endgerät einen Identifikator für die erste Multicast-Gruppe mit. Außerdem werden bei dem Zustandsübergang ZU1 dem mobilen Endgerät die Konfigurationen der allgemeinen Transportkanäle MCH und der allgemeinen physikalischen Kanäle PMCH mitgeteilt, über die Multicast-Nachrichten an das mobile Endgerät übersandt werden können. Alternativ kann das mobile Endgerät die Konfigurationen aus den Systeminformationen auslesen. Außerdem wird bei dem ersten Zustandsübergang ZU1 dem mobilen Endgerät die Zuordnung zwischen einem Datenteil des Transportformatkombinationsidentifikators des allgemeinen physikalischen Kanals S-CCPCH, der zur Signalisierung von physikalischen Übertragungskanälen PMCH und Transportkanälen MCH, die auf die Übertragungskanäle PMCH abgebildet werden, für Multicast-Nachrichten verwendet werden soll, zu der für die Übertragung der Multicast-Nachricht zu verwendenden Transportformatkombination, zu der zu verwendenden Ressource in Form eines physikalischen Kanals PMCH und zu der Multicast-Gruppe mitgeteilt. Alternativ kann das mobile Endgerät diese Zuordnung aus den Systeminformationen auslesen.

Ein zweiter Zustandsübergang ZU2 erfolgt von dem zweiten Zustand MC_Saving zu dem ersten Zustand MC_0 und ist ebenfalls in Fig. 1 veranschaulicht. Bei dem Zustandsübergang ZU2 meldet sich das mobile Endgerät von einer oder mehreren Multicast-Gruppen ab. Eine Multicast-Einheit in der BMC-Schicht der UMTS-Protokollarchitektur wird gelöscht.

Bei einem dritten Zustandsübergang ZU3 gelangt das mobile Endgerät von dem zweiten Zustand MC_Saving zu dem dritten Zustand MC_Monitoring. Bei diesem dritten Zustandsübergang ZU3 erhält das mobile Endgerät eine Benachrichtigung von einer Basisstation, dass Multicast-Nachrichten zu der

Multicast-Gruppe vorliegen, zu der das mobile Endgerät gehört. Außerdem baut das mobile Endgerät eine Signalisierungsverbindung zur Basisstation auf und empfängt ständig den physikalischen Kanal S-CCPCH, der einen geteilten Transportformatkombinationsidentifikator TFCI enthält. Die Aufteilung des Transportformatkombinationsidentifikators TFCI wird später erläutert.

Bei einem vierten Zustandsübergang ZU4, bei dem das mobile Endgerät von dem dritten Zustand MC_Monitoring zu dem Zustand MC_Active wechselt, zeigt der auf dem physikalischen Kanal S-CCPCH empfangene Transportformatkombinationsidentifikator TFCI an, das im nächsten Zeitrahmen Nachrichten für die Multicast-Gruppe vorliegen, der das mobile Endgerät angehört. Aufgrund dessen baut das mobile Endgerät einen allgemeinen Transportkanal und einen allgemeinen physikalischen Kanal zum Empfang der zu erwartenden Multicast-Nachrichten auf, wobei die Auswahl, welcher allgemeine physikalische Kanal von dem mobilen Endgerät zu verwenden ist, dem Transportformatkombinationsidentifikator TFCI entnommen wird.

Ein fünfter Zustandsübergang ZU5, bei dem ein Zustandswechsel von dem vierten Zustand MC_Active zu dem dritten Zustand MC_Monitoring erfolgt, findet statt, wenn der auf dem physikalischen Kanal S-CCPCH empfangene Transportformatkombinationsidentifikator TFCI anzeigt, dass in nächsten Zeitrahmen keine Multicast-Nachrichten für die Multicast-Gruppe vorliegen, der das mobile Endgerät angehört. Die Signalisierungsverbindung zwischen dem mobilen Endgerät und dem Knoten des Mobilkommunikationsnetzwerkes bleibt erhalten, wobei das mobile Endgerät weiterhin ständig den allgemeinen physikalischen Kanal S_CCPCH empfängt.

Ein sechster Zustandsübergang ZU6 findet statt, wenn für eine gewisse Zeit keine Multicast-Nachrichten für die Multicast-Gruppe oder -Gruppen vorliegen, zu der bzw. zu denen das mobile Endgerät gehört. Aufgrund dieser Feststellung entscheidet das Mobilkommunikationsnetzwerk, das mobile Endgerät in einen batteriesparenden Zustand zu bringen und baut die Signalisierungsverbindung in Form des physikalischen Kanals S-CCPCH zwischen dem mobilen Endgerät und dem Mobilkommunikationsnetzwerk ab (RRC Idle Mode). Alternativ kann das Mobilkommunikationsnetzwerk dem mobilen Endgerät mitteilen, in den RRC-Zustand CELL_PCH oder URA_PCH zu gehen.

Nachfolgend wird beispielshalber beschrieben, welche Zustandswechsel für vier mobile Endgeräte UE1, UE2, UE3 und UE4 in einer Mobilfunkzelle Z1 stattfinden, die von einer Basisstation BS1 aufgespannt wird, und zwar anhand der Figur 2. Die Basisstation BS1 ist über eine Festnetzverbindung mit einem Knoten eines Mobilkommunikationsnetzwerkes RNC1 (RNC bedeutet "Radio Network Controller") verbunden. Der Knoten des Mobilkommunikationsnetzwerkes RNC1 ist wiederum über eine weitere Festnetzverbindung mit einer höheren Einheit des Mobilkommunikationsnetzwerkes verbunden, welche für diese Erfindung jedoch nicht relevant und daher in Figur 2 nicht dargestellt ist.

Für dieses Ausführungsbeispiel wird angenommen, dass sämtliche vier mobilen Endgeräte UE1, UE2, UE3 und UE4, zu einer Multicast-Gruppe A gehören. Weiterhin soll sich das mobile Endgerät UE1 im RRC-Zustand Idle Mode befinden. Somit hat der Knoten des Mobilkommunikationsnetzwerkes RNC1 keine Kenntnis darüber, dass sich das mobile Endgerät UE1 in einer Mobilfunkzelle befindet, die von dem Knoten des Mobilkommunikationsnetzwerkes RNC1 gesteuert wird. Das mobile Endgerät UE1 liest jedoch Systeminformationen, die der Knoten des Mobilkommunikationsnetzwerkes RNC1 in der gesamten Mobilfunkzelle Z1 verteilt und empfängt regelmäßig den für UMTS vorgesehenen Benachrichtungskanal PICH, um zu überwachen, ob Benachrichtigungen für das mobile Endgerät UE1 auf dem Benachrichtungskanal PCH gesendet werden.

Das mobile Endgerät UE2 soll sich beispielhaft im RRC-Zustand CELL_PCH befinden. Auch das mobile Endgerät UE2 liest somit die Systeminformationen und hört regelmäßig auf den Benachrichtungs-Indikationskanal PICH.

Das mobile Endgerät UE3 soll sich beispielsweise in dem RRC-Zustand CELL_FACH befinden. Es liest somit die Systeminformationen aus. Außerdem empfängt das mobile Endgerät UE3 ständig auf dem physikalischen Kanal S-CCPCH. Beispielhaft soll sich das mobile Endgerät UE4 im RRC-Zustand CELL_DCH befinden. In diesem Zustand liest das mobile Endgerät UE4 keine Systeminformationen aus. Jedoch kann irgendein mobiles Endgerät in der Mobilfunkzelle Z1 ständig einen allgemeinen physikalischen Kanal S-CCPCH empfangen.

Gemäß diesem Ausführungsbeispiel sind in den Systeminformationen die Konfigurationen zweier physikalischer Kanäle PMCH1, PMCH2 zur Übertragung von Multicast-Nachrichten enthalten. Weiterhin soll die Konfiguration des allgemeinen physikalischen Kanals S-CCPCH, der bereits für das UMTS definiert ist, in den Systeminformationen enthalten sein. Der physikalische Kanal S-CCPCH hat die Aufgabe, einen geteilten Transportformatkombinationsidentifikator TFCI zu übertragen, sowie eine Information, das gerade dieser allgemeine physikalische Kanal S-CCPCH den geteilten Transportformatkombinationsidentifikator TFCI überträgt. Bei diesem Ausführungsbeispiel soll außerdem eine variable Teilung des Transportformatkombinationsidentifikators TFCI angenommen werden, weshalb in den Systeminformationen eine weitere Information enthalten ist, die angibt, wie viele der beispielsweise 10 Bits für die Signalisierung der Multicast-Gruppe, zur Angabe der Transportformatkombinationen (TFC) von Multicast-Transportkanälen MCH, die auf die physikalischen Multicast-Kanäle PMCH1, PMCH2, abgebildet werden, und zur Zuweisung der physikalischen Multicast-Kanäle verwendet werden sollen. In einem alternativen Ausführungsbeispiel, bei dem die Aufteilung des Transportformatkombinationsidentifikators (TFCI) fest ist, beispielsweise jeweils 5 Bits, ist die Information, wie viele Bits für die Multicast-Funktion verwandt werden, nicht erforderlich.

Weiterhin sind bei diesem Ausführungsbeispiel in den Systeminformationen auch die Zuordnungen von Transportformatkombinationsidentifikatoren TFCI zu physikalischen Multicast-Kanälen und Transportformatkombinationen enthalten.

Bei diesem Ausführungsbeispiel wird davon ausgegangen, dass lediglich ein Multicast-Transportkanal MCH in der Mobilfunkzelle Z1 konfiguriert wird, über den Multicast-Nachrichten übertragen werden sollen. Für diesen Multicast-Transportkanal MCH wird in den Systeminformationen auch der Transportformatsatz TFS übertragen. Da lediglich ein Multicast-Transportkanal, nämlich der Kanal MCH, auf die physikalischen Multicast-Kanäle PMCH1, PMCH2 abgebildet wird, ist jedes Transportformat TF gleichzeitig eine Transportformatkombination. Weiter wird angenommen, dass lediglich zwei Transportformate konfiguriert worden sind, so dass sich die Transportformatkombinationen TFC1 und TFC2 ergeben. Der einer Transportformatkombination, entweder TFC1 oder TFC2, zugeordnete Transportformatkombinationsidentifikator TFCI_{PMCH} wird als ein Teil des Transportformatkombinationsidentifikators TFCI des allgemeinen physikalischen Kanals S-CCPCH übertragen. Der andere Teil des Transportformatkombinationsidentifikators, der als TFCI _{S-CCPCH} bezeichnet wird, gibt an, welche Transportformatkombination für den allgemeinen physikalischen Kanal S-CCPCH maßgeblich ist.

Da lediglich vier verschiedene Werte für den zweiten Datenteil des Transportformatkombinationsidentifikators benötigt werden, fügt der Knoten des Mobilkommunikationsnetzwerkes RNC1 in die Systeminformationen eine Information ein, das 8 Bits der insgesamt 10 Bits für den Transportformatkombinationsidentifikator für die Signalisierung des Transportformatkombinationsidentifikators TFCI _{S-CCPCH} und 2 Bits für die Signalisierung des Transportformatkombinationsidentifikators TFCI _{PMCH} verwendet werden. Die für dieses Ausführungsbeispiel angenommene Zuordnung ist in der folgenden Tabelle dargestellt:

| S-CCPCH TFCI Teil 2 Nummer | Ressourcen zur Übertragung von Multicast-Nachrichten | Verwendete Transportformatkombinationen |
|---|---|---|
| TFCI1 = 00 | PMCH1 | TFC1 |
| TFCI2 = 01 | PMCH1 + 2 | TFC1 |
| TFCI3 = 10 | PMCH2 | TFC2 |
| TFCI4 = 11 | PMCH1 + 2 | TFC2 |

Aufgrund dieser in der gesamten Mobilfunkzelle Z1 verteilten Systeminformationen haben die mobilen Endgeräte UE1, UE2 und UE3 sämtliche für einen Empfang von Multicast-Nachrichten erforderlichen Informationen empfangen. Das mobile Endgerät UE4 liest die Systeminformationen nicht, da es sich im RRC-Zustand CELL_DCH befindet. Alternativ kann das mobile Endgerät die Systeminformationen jedoch entweder gelesen haben, bevor es im letztgenannten Zustand übergegangen ist oder wenn es durch ein "Handover" von einer anderen Quelle in die Mobilfunkzelle Z1 gewechselt ist. Im letzteren Fall sendet der Knoten des Mobilkommunikationsnetzwerkes RNC1 dem mobilen Endgerät UE4 die für den Empfang von Multicast-Nachrichten erforderlichen Informationen zusammen mit demjenigen Informationen zu, mit denen der Wechsel (Handover) von der weiteren Mobilfunkzelle zu der Zelle Z1 veranlasst wurde.

Auf diese Weise ist sämtlichen mobilen Endgeräten innerhalb der Mobilfunkzelle Z1 die Konfiguration der physikalischen Kanäle PMCH zur Übertragung von Multicast-Nachrichten sowie die Zuordnung von Transportformatkombinationsidentifikator zur verwendeter Transportformatkombination, der zu verwendende physikalische Kanal PMCH und die betroffene Multicast-Gruppe bekannt.

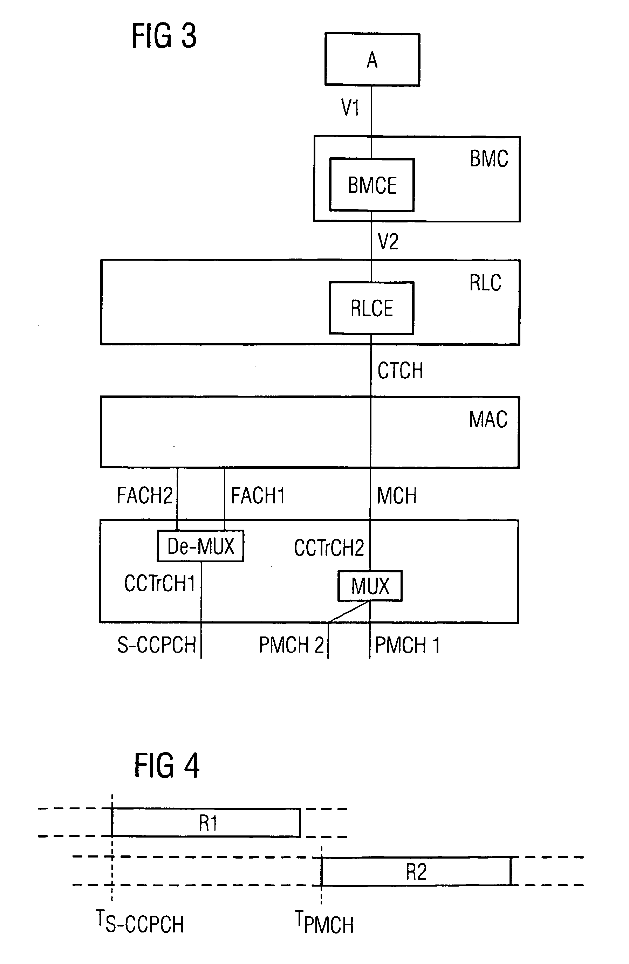

Im Folgenden wird angenommen, dass in den mobilen Endgeräten UE1, UE2, UE3 und UE4, die zu der Multicast-Gruppe A gehören, eine Anwendung, aktiv ist, welche Multicast-Nachrichten verwendet, die an die Multicast-Gruppe A gesendet werden. Nachdem die mobilen Endgeräte der Multicast-Gruppe A durch die Systeminformationen erfahren haben, dass in der Mobilfunkzelle Z1 Multicast-Nachrichten für die Multicast-Gruppe A gesendet werden, bauen diese mobilen Endgeräte eine BMC-Einheit BMCE in der Schicht BMC der Protokollarchitektur für UMTS auf, welche über eine Verbindung V1 mit einer Anwendung A verbunden ist, wie aus Figur 3 hervorgeht. Außerdem wird eine RLC-Einheit RLCE in der Schicht RLC der Protokollarchitektur für UMTS aufgebaut, die über eine Verbindung V2 mit der BMC-Einheit BMCE verbunden ist, und außerdem einen von der MAC-Schicht angebotenen logischen Kanal CTCH nutzt. Weiterhin ist die MAC-Schicht über den allgemeinen Transportkanal MCH für die Übertragung von Multicast-Nachrichten mit der physikalischen Schicht verbunden.

Da durch die Systeminformationen die zur Übertragung von Multicast-Nachrichten zur Verfügung stehenden physikalischen Kanäle lediglich bekannt gemacht, jedoch noch nicht zur Übertragung von Multicast-Nachrichten der Multicast-Gruppe A zugewiesen worden sind, werden die zur Verfügung stehenden physikalischen Kanäle PMCH noch nicht auf den allgemeinen Transportkanal MCH abgebildet.

Da sich das mobile Endgerät UE3 und das mobile Endgerät UE4 im RRC-Zustand CELL_FACH bzw. CELL_DCH befinden, können sie bereits ständig den im UMTS-spezifizierten allgemeinen physikalischen Kanal S-CCPCH empfangen und den auf diesem Kanal übertragenen, geteilten Transportformatkombinationsidentifikator TFCI auswerten. Gemäß den vorstehenden Zustandsbeschreibungen befinden sich die mobilen Endgeräte UE3, UE4 somit im dritten Zustand MC Monitoring.

Die mobilen Endgeräte UE1, UE2 befinden sich in dem RRC-Zustand Idle Mode bzw. CELL-PCH. Diese mobilen Endgeräte hören auf den Benachrichtigungs-Indikationskanal PICH, und falls auf dem PICH signalisiert wird, dass Nachrichten für ein bestimmtes mobiles Endgerät auf dem Benachrichtigungskanal PCH vorliegen, empfängt dieses mobile Endgerät den Benachrichtungskanal PCH.

Es wird nun angenommen, dass eine Multicast-Nachricht an die Multicast-Gruppe A übertragen werden soll. Es wird vorausgesetzt, dass das Mobilkommunikationsnetzwerk Kenntnis darüber hat, welche mobilen Endgeräte der Multicast-Gruppe A angehören. Der Knoten des Mobilkommunikationsnetzwerkes RNC1 erhält eine Information darüber, in welchen Mobilfunkzellen das mobile Endgerät UE1 vermutet wird. Der Knoten des Mobilkommunikationsnetzwerkes RNC1 kann diese Information im Rahmen der Verwaltung der ihm zugeordneten mobilen Endgeräte, einschließlich des Endgerätes U1, erhalten. Der Knoten RNC1 des Mobilkommunikationsnetzwerkes sendet nun eine Information auf dem Benachrichtigungs-Indikationskanal PICH in all den Mobilfunkzellen, die dem Knoten RNC1 des Mobilkommunikationsnetzwerkes zugeordnet sind und in denen das mobile Endgerät UE1 vermutet wird. Wie bereits oben erwähnt, wird davon ausgegangen, dass sich das mobile Endgerät UE1 in der Mobilfunkzelle Z1 befindet. Das mobile Endgerät UE1 empfängt die Information, dass Nachrichten für das mobile Endgerät UE1 vorliegen, auf dem Benachrichtigungs-Indikationskanal PICH und empfängt darauf hin den Benachrichtigungskanal PCH. Das Mobilkommunikationsnetzwerk sendet auf dem Benachrichtigungskanal PCH eine Benachrichtigung, die eine Information enthält, die angibt, dass eine Multicast-Nachricht vorliegt, und für welche Multicast-Gruppe die Nachricht bestimmt ist. Dazu ist eine Identifikation der Multicast-Gruppe in der Benachrichtigung enthalten, die dem mobilen Endgerät UE1 beispielsweise bei Eintritt in die Multicast-Gruppe mitgeteilt wurde, und zwar über die Systeminformationen. Sobald das mobile Endgerät UE1 feststellt, dass die Identifikation der Multicast-Gruppe, die es auf dem Benachrichtigungskanal PCH empfängt, mit seiner eigenen Identifikation übereinstimmt, baut es eine Signalisierungsverbindung zum Knoten RNC1 des Mobilkommunikationsnetzwerkes auf. Für die Übertragung geringer Datenmengen und Signalisierungsnachrichten von dem Knoten RNC1 des Mobilkommunikationsnetzwerkes an das mobile Endgerät UE1 wird dabei der allgemeine physikalische Kanal S-CCPCH aufgebaut, auf dem der geteilte Transportformatkombinationsidentifikator TFCI übertragen wird. Die notwendigen Informationen zur Konfiguration seiner Protokollschichten entnimmt das mobile Endgerät UE1 dabei den vorher erhaltenen Systeminformationen. Das mobile Endgerät UE1 befindet sich somit im RRC-Zustand CELL_FACH, was dem dritten Zustand MC_Monitoring aus Figur 1 entspricht.

Der Knoten des Mobilkommunikationsnetzwerks RNC1 hat außerdem Kenntnis darüber, dass sich das mobile Endgerät UE2 in der Mobilfunkzelle Z1 befindet. Auch für das mobile Endgerät UE2 überträgt der Knoten des Mobilkommunikationsnetzwerkes RNC1 nun auf dem Benachrichtungs-Indikationskanal PICH in der Mobilfunkzelle Z1 eine Information, dass eine Benachrichtigung auf dem Benachrichtungskanal PCH für das mobile Endgerät UE2 übertragen wird. Das mobile Endgerät UE2 empfängt die Information auf dem Benachrichtungs-Indikationskanal PICH und empfängt daraufhin den Benachrichtungskanal PCH. Der Knoten des Mobilkommunikationsnetzwerkes RNC1 sendet nunmehr auf dem Benachrichtungskanal PCH eine Benachrichtigung, die eine Information darüber enthält, dass eine Multicast-Nachricht vorliegt und für welche Multicast-Gruppe die Nachricht bestimmt ist. Dazu ist in der Information des Benachrichtigungskanals PCH auch eine Identifikation der Multicast-Gruppe enthalten, die dem mobilen Endgerät UE2 beispielsweise bei Eintritt in die Multicast-Gruppe mitgeteilt würde. Auch das mobile Endgerät UE2 baut nun eine Signalisierungsverbindung zum Knoten des Mobilkommunikationsnetzwerkes RNC1 auf. Vorher findet ein Vergleich der Identitäts-Information des PCH bezüglich der Identität der Multicast-Gruppe mit der Information statt, die bei Eintritt in die Multicast-Gruppe mitgeteilt worden sein kann.

Für die Übertragung geringer Datenmengen und Signalisierungsnachrichten von dem Knoten des Mobilkommunikationsnetzwerkes RNC1 an das mobile Endgerät UE2 wird dabei ebenfalls der allgemeine physikalische Kanal S-CCPCH aufgebaut, auf dem der geteilte Transportformatkombinationsidentifikator TFCI übertragen wird. Die notwendigen Informationen zur Konfiguration seiner Protokollschichten entnimmt das mobile Endgerät UE2 dabei den Systeminformationen. Das mobile Endgerät UE2 befindet sich somit nun im RRC-Zustand CELL-FACH und im dritten Zustand MC_Monitoring (vgl. Figur 1).

Sämtliche mobilen Endgeräte UE1, UE2, UE3 und UE4 der Multicast-Gruppe A befinden sich nunmehr in dem dritten Zustand MC_Monitoring und empfangen den allgemeinen physikalischen Kanal S-CCPCH, auf dem der geteilte Transportformatkombinationsidentifikator TFCI übertragen wird. Der Knoten des Mobilkommunikationsnetzwerkes RNC1 entscheidet nun, welche Ressourcen in Form von Transportkanälen und physikalischen Kanälen und welche Transportformatkombination TFC für die Übertragung der Multicast-Nachricht verwendet werden sollen. Für dieses Ausführungsbeispiel wird angenommen, dass für die Übertragung beide physikalischen Kanäle PMCH1, PMCH2 verwendet werden sollen, und zwar unter Benutzung der Transportformatkombination TFC1. Der Knoten des Mobilkommunikationsnetzwerkes RNC1 fügt folglich den Transportformatkombinationsidentifikator TFCI2 = 01 in die zwei Bits des zweiten Datenteils des auf dem allgemeinen physikalischen Kanal S-CCPCH übertragenen Transportformatkombinationsidentifikators TFCI ein. Die mobilen Endgeräte UE1, UE2, UE3 und UE4 empfangen nun den allgemeinen physikalischen Kanal S-CCPCH, dessen zweiter Datenteil die Codierung des Transportformatidentifikators TFCI2 enthält. Durch die Systeminformationen haben die mobilen Endgeräte Kenntnis darüber, dass der zweite Datenteil des Transportformatkombinationsidentifikators TFCI, der auf dem allgemeinen physikalischen Kanal S-CCPCH übertragen wird, zwei Bits lang ist. Die mobilen Endgeräte UE1, UE2, UE3 und UE4 verwenden den ersten Datenteil des auf dem allgemeinen physikalischen Kanal S-CCPCH übertragenen Transportformatkombinationsidentifikators TFCI, um die auf dem allgemeinen physikalischen Kanal S-CCPCH empfangenen Daten in den relevanten Transportformaten an diejenigen Transportkanäle weiterzuleiten, die auf den allgemeinen physikalischen Kanal S-CCPCH abgebildet sind. Anhand des zweiten Datenteils des Transportformatkombinationsidentifikators TFCI, der auf dem allgemeinen physikalischen Kanal S-CCPCH übertragen wird, erkennen die mobilen Endgeräte, dass im nächsten Zeitrahmen (Frame) auf den physikalischen Multicast-Kanälen PMCH1, PMCH2 mit der Transportformatkombination TFC1 Daten für die Multicast-Gruppe A übertragen werden sollen. Diejenigen mobilen Endgeräte, die zu der Multicast-Gruppe A gehören - in diesem Ausführungsbeispiel die mobilen Endgeräte UE1 bis UE4 - konfigurieren ihre physikalische Schicht entsprechend der Konfigurationen, die sie den Systeminformationen entnommen haben. Dabei wird der Transportkanal MCH auf die physikalischen Kanäle PMCH1 und PMCH2 abgebildet.

Die Konfigurationen der Protokollschichten der mobilen Endgeräte UE1 bis UE4 und die Abbildung der Verbindungen zwischen den Schichten ist in Figur 3 dargestellt.

Transportkanäle FACH1, FACH2, die in diesem Ausführungsbeispiel auf den allgemeinen physikalischen Kanal S-CCPCH abgebildet werden, werden unter Zwischenschaltung eines De-Multiplexers De-MUX in einem Bündel CCTrCH1, einem internen Kanal der Bitübertragungsschicht, zusammengefasst, das auf den allgemeinen physikalischen Kanal S-CCPCH abgebildet wird. Die Abbildung von Verbindungen oberhalb der Schicht MAC auf die Transportkanäle FACH1, FACH2 ist hier nicht von Bedeutung und daher auch nicht in Figur 3 dargestellt.

Der Transportkanal MCH wird unter Zwischenschaltung eines Multiplexers MUX in einem weiteren Bündel CCTrCH2 zusammengefasst, welches dann auf die physikalischen Multicast-Kanäle PMCH1, PMCH2 abgebildet wird.

Die physikalischen Kanäle PMCH1, PMCH2 werden ein wenig zeitversetzt zu dem allgemeinen physikalischen Kanal S-CCPCH gesendet, wie anhand von Figur 4 veranschaulicht ist. Der Zeitrahmen R1 für den allgemeinen physikalischen Kanal S-CCPCH beginnt bei T_{S-CCPCH}, während der Zeitrahmen für die beiden physikalischen Kanäle PMCH1, PMCH2 bei T_{PMCH} beginnt.

Die mobilen Endgeräte UE1, UE2, UE3 und UE4 der Multicast-Gruppe A befinden sich nun im vierten Zustand MC_Active. Sobald eine der mobilen Endgeräte UE1 bis UE4 den allgemeinen physikalischen Kanal S-CCPCH empfangen hat, insbesondere einen bestimmten Zeitrahmen zum Zeitpunkt T_{STCCPCH}, so empfängt das mobile Endgerät die physikalischen Multicast-Kanäle PMCH1, PMCH2 zum Zeitpunkt T_{PMCH}. Die physikalischen Kanäle PMCH1, PMCH2 werden zunächst in dem Bündel CCTrCH2 zusammengefasst. Durch Auswertung des zweiten Datenteils des Transportformatkombinationsidentifikators TFCI, der auf dem allgemeinen physikalischen Kanal S-CCPCH empfangen wurde, wird die Transportformatkombination TFC bestimmt, die für die Übertragung der Multicast-Nachricht maßgeblich ist, und die Daten der Multicast-Nachricht können in einem zugehörigen Transportformat über den Transportkanal MCH an die MAC-Schicht weitergegeben werden. Anschließend gelangen die Daten der Multicast-Nachricht über einen logischen Kanal CTCH und die RNC-Schicht sowie eine Verbindung V2 zu einer BMC-Einheit in der BMC-Schicht, wie anhand von Figur 3 veranschaulicht wird. Von dort aus wird die Multicast-Nachricht über eine Verbindung V1 an eine Anwendung weitergeleitet, welche die Multicast-Nachricht weiterverarbeitet.

Der Knoten des Mobilkommunikationsnetzwerkes RNC1 hat somit die Möglichkeit, von Zeitrahmen zu Zeitrahmen zu entscheiden, ob und welche Ressourcen in Form von physikalischen Kanälen und Transportkanälen der Multicast-Gruppe A zugewiesen werden.

Sind in einem bestimmten Zeitraum keine Nachrichten für die Multicast-Gruppe A am Knoten des Mobilkommunikationsnetzwerkes RNC1 eingetroffen, kann der Knoten des Mobilkommunikationsnetzwerkes RNC1 für jedes der mobilen Endgeräte UE1, UE2, UE3 und UE4 individuell entscheiden, ob es in einen energiesparenderen Zustand zurückfallen soll. Für dieses Ausführungsbeispiel wird angenommen, dass das mobile Endgerät UE4 noch immer eine individuelle Signalisierungsverbindung, beispielsweise einen dedizierten physikalischen Kanal PDCH, zum Knoten des Mobilkommunikationsnetzwerkes RNC1 aufgebaut hat. Das mobile Endgerät UE4 bleibt daher im RRC-Zustand CELL_DCH bzw. im dritten Zustand MC_Monitoring. Sofern noch kleine Datenmengen von dem Knoten des Mobilkommunikationsnetzwerkes RNC1 an das mobile Endgerät UE3 übertragen werden sollen, entscheidet der Knoten des Mobilkommunikationsnetzwerks RNC1, dass das mobile Endgerät UE3 weiter im RRC-Zustand CELL_FACH verbleiben soll. Auch das mobile Endgerät UE3 befindet sich somit weiterhin in dem dritten Zustand MC_Monitoring. Für die mobilen Endgeräte UE1 und UE2 liegen bei diesem Ausführungsbeispiel keine weiteren Daten zur Übertragung an. Der Knoten des Mobilkommunikationsnetzwerkes RNC1 entscheidet daher, dass die mobilen Endgeräte UE1 und UE2 in den RRC-Zustand CELL_PCH übergehen sollen und senden daher eine Signalisierungsnachricht an die mobilen Endgeräte UE1 und UE2, worauf diese die Signalisierungsverbindung zu dem Knoten des Mobilkommunikationsnetzwerkes RNC1 abbauen und in den RRC-Zustand CELL_PCH übergehen. Die mobilen Endgeräte UE1 und UE2 gelangen somit in den zweiten Zustand MC_Saving.

## Patentansprüche

1. Verfahren zur Zuweisung von physikalischen Übertragungskanälen (PMCH) in einer Mobilfunkzelle, in der sich eine Basisstation, die mit einem Knoten eines Mobilkommunikationsnetzes (RNC) verbunden ist, und eine Mehrzahl mobiler Endgeräte (UE) befinden, wobei in sämtlichen mobilen Endgeräten (UE) und in dem Knoten des Mobilkommunikationsnetzes (RNC) die UMTS-Protokollarchitektur für wenigstens die Schicht (2) und die Schicht (3) des UMTS-Schichten-Modells verwirklicht ist, und von der Basisstation der Mobilfunkzelle aus bei wenigstens einer Gruppe der mobilen Endgeräte (UE) für jedes mobile Endgerät der jeweils für einen Multicast-Dienst zu verwendende physikalische Übertragungskanal (PMCH) signalisiert wird,
**dadurch gekennzeichnet,**
**dass** die Signalisierung der Zuweisung eines physikalischen Übertragungskanals (PMCH) zu einem der mobilen Endgeräte(UE) der Gruppe von dem Knoten des Mobilkommunikationsnetzes (RNC) aus über die Basisstation an das mobile Endgerät (UE) mittels eines allgemeinen physikalischen Kanals (S-CCPCH) erfolgt und der Gruppe der mobilen Endgeräte (UE) vorab Systeminformationen bekannt gemacht werden, die die Konfigurationen der physikalischen Übertragungskanäle (PMCH) für den Multicast-Dienst und des allgemeinen physikalischen Kanals (S-CCPCH) sowie die Information, dass die Signalisierung der Zuweisung der physikalischen Übertragungskanäle (PMCH) auf dem allgemeinen physikalischen Kanal (S-CCPCH) erfolgt, enthalten,
wobei über den allgemeinen physikalischen Kanal (S-CCPCH) periodisch ein fortlaufend aktualisierter Transportformatkombinationsidentifikator (TFCI) an die Gruppe der mobilen Endgeräte (UE) übertragen wird, der angibt, welche Transportkanäle (FACH) mit welcher Transportformatkombination (TFC) auf den allgemeinen physikalischen Kanal (S-CCPCH) abgebildet werden, welches mobile Endgerät (UE) welchen physikalischen Übertragungskanal (PMCH) für den Multicast-Dienst nutzen soll und welche Transportkanäle (MCH) mit welcher Transportformatkombination (TFC) auf den jeweiligen physikalischen Übertragungskanal (PMCH) abgebildet werden.

2. Verfahren nach Anspruch 1, **dadurch gekennzeichnet, dass** die Systeminformationen einen Code zur Identifizierung der Gruppe der mobiler Endgeräte (UE) als Multicast-Gruppe enthalten.

3. Verfahren nach Anspruch 1, **dadurch gekennzeichnet, dass** der Transportformatkombinationsidentifikator (TFCI) aufgeteilt ist und einen ersten Datenteil, der einen
Transportformatkombinationsidentifikator (TFCI_{S-CCPCH}) für die auf den allgemeinen physikalischen Kanal (S-CCPCH) abgebildeten Transportkanäle enthält, und einen zweiten
Datenteil aufweist, der einen
Transportformatkombinationsidentifikator (TFCI_{PMCH}) für die auf den physikalischen Übertragungskanal (PMCH) abgebildeten Transportkanäle (MCH) und einen Code zur Identifizierung des von einem jeweiligen mobilen Endgerät zu benutzenden physikalischen Übertragungskanals (PMCH) enthält.

4. Verfahren nach Anspruch 3, **dadurch gekennzeichnet, dass** die Systeminformationen einen Code zur Zuweisung der Bits des Transportformatkombinationsidentifikators (TFCI) zu dem ersten und dem zweiten Datenteil enthalten.

5. Verfahren nach einem der Ansprüche 1 bis 4, **dadurch gekennzeichnet, dass** der allgemeine physikalische Kanal (S-CCPCH) zeitlich vor den physikalischen Übertragungskanälen (PMCH) gesendet wird.

6. Verfahren nach einem der Ansprüche 1 bis 5, **dadurch gekennzeichnet, dass** in der Bitübertragungsschicht die dem allgemeinen physikalischen Kanal (S-CCPCH) zugeordneten Transportkanäle (FACH) in einem ersten Bündel (CCTrCH1) und die den physikalischen Übertragungskanälen (PMCH) zugeordneten Transportkanäle (MCH) in einem zweiten Bündel (CCTrCH2) zusammengefasst sind.

## Claims

1. Method for allocation of physical transmission channels (PMCH) in a mobile radio cell, in which a base station which is connected to a node in a mobile communications network (RNC) and a number of mobile terminals (UE) are located, with the UMTS protocol architecture for at least the layer (2) and the layer (3) of the UMTS layer model being implemented in all of the mobile terminals (UE) and in the node in the mobile communications network (RNC), and with the respective physical transmission channel (PMCH) to be used for a multicast service being signaled from the base station in the mobile radio cell for each mobile terminal in at least one group of mobile terminals (UE),
**characterized**
**in that** the signaling of the allocation of a physical transmission channel (PMCH) to one of the mobile terminals (UE) in the group from the node in the mobile communications network (RNC) takes place via the base station to the mobile terminal (UE) by means of a general physical channel (S-CCPCH), and the group of mobile terminals (UE) is notified in advance of system information which includes the configurations of the physical transmission channels (PMCH) for the multicast service and of the general physical channel (S-CCPCH) as well as information that the allocation of the physical transmission channels (PMCH) is being signaled on the general physical channel (S-CCPCH),
in which a continuously updated transport format combination identifier (TFCI) is transmitted periodically via the general physical channel (S-CCPCH) to the group of mobile terminals (UE), indicating which transport channels (FACH) are being mapped by means of which transport format combination (TFC) onto the general physical channel (S-CCPCH), which mobile terminal (UE) should use which physical transmission channel (PMCH) for the multicast service, and which transport channels (MCH) are being mapped by means of which transport format combination (TFC) onto the respective physical transmission channel (PMCH).

2. Method according to Claim 1, **characterized in that** the system information includes a code for identification of the group of mobile terminals (UE) as a multicast group.

3. Method according to Claim 1, **characterized in that** the transport format combination identifier (TFCI) is subdivided and has a first data part, which includes a transport format combination identifier (TFCI_{S-CCPCH}) for the transport channels which are mapped onto the general physical channel (S-CCPCH), and a second data part which includes a transport format combination identifier (TFCI_{PMCH}) for the transport channels (MCH) which are mapped onto the physical transmission channel (PMCH), and a code for identification of the physical transmission channel (PMCH) to be used by a respective mobile terminal.

4. Method according to Claim 3, **characterized in that** the system information includes a code for allocation of the bits of the transport format combination identifier (TFCI) to the first data part and to the second data part.

5. Method according to one of claims 1 to 4, **characterized in that** the general physical channel (S-CCPCH) is transmitted at a time before the physical transmission channels (PMCH).

6. Method according to one of Claims 1 to 5, **characterized in that** the transport channels (FACH) which are allocated to the general physical channel (S-CCPCH) are combined in a first bundle (CCTrCH1) in the bit transmission layer, and the transport channels (MCH) which are allocated to the physical transmission channels (PMCH) are combined in a second bundle (CCTrCH2) in the bit transmission layer.

## Revendications

1. Procédé d'attribution de canaux de transmission physiques (PMCH) dans une cellule de radiocommunication mobile dans laquelle se trouvent une station de base qui est reliée à un noeud d'un réseau de communication mobile (RNC) et plusieurs terminaux mobiles (UE), l'architecture de protocole UMTS étant réalisée pour au moins la couche (2) et la couche (3) du modèle en couches UMTS dans tous les terminaux mobiles (UE) et dans le noeud du réseau de communication mobile (RNC) et, à partir de la station de base de la cellule de radiocommunication mobile, le canal de transmission physique (PMCH) à utiliser à chaque fois pour un service de multidiffusion étant signalé auprès d'au moins un groupe des terminaux mobiles (UE) pour chaque terminal mobile,
**caractérisé par le fait que**
la signalisation de l'attribution d'un canal de transmission physique (PMCH) à l'un des terminaux mobiles (UE) du groupe s'effectue à partir du noeud du réseau de communication mobile (RNC) par l'intermédiaire de la station de base vers le terminal mobile (UE) au moyen d'un canal physique général (S-CCPCH) et que des informations de système sont préalablement portées à la connaissance du groupe des terminaux mobiles (UE), lesquelles informations de système contiennent les configurations des canaux de transmission physiques (PMCH) destinés au service de multidiffusion et du canal physique général (S-CCPCH) ainsi que l'information selon laquelle la signalisation de l'attribution des canaux de transmission physiques (PMCH) s'effectue sur le canal physique général (S-CCPCH), un identificateur de combinaison de format de transport (TFCI) continuellement actualisé étant transmis périodiquement par l'intermédiaire du canal physique général (S-CCPCH) au groupe des terminaux mobiles (UE), lequel identificateur indique quels canaux de transport (FACH) avec quelle combinaison de format de transport (TFC) sont projetés sur le canal physique général (S-CCPCH), quel terminal mobile (UE) doit utiliser quel canal de transmission physique (PMCH) pour le service de multidiffusion et quels canaux de transport (MCH) avec quelle combinaison de format de transport (TFC) sont projetés sur le canal de transmission physique respectif (PMCH).

2. Procédé selon la revendication 1, **caractérisé par le fait que** les informations de système contiennent un code pour l'identification du groupe des terminaux mobiles (UE) comme groupe de multidiffusion.

3. Procédé selon la revendication 1, **caractérisé par le fait que** l'identificateur de combinaison de format de transport (TFCI) est divisé et comporte une première partie de données, qui contient un identificateur de combinaison de format de transport (TFCI_{S-CCPCH}) pour les canaux de transport projetés sur le canal physique général (S-CCPCH), et une deuxième partie de données, qui contient un identificateur de combinaison de format de transport (TFCI_{PMCH}) pour les canaux de transport (MCH) projetés sur le canal de transmission physique (PMCH) et un code pour l'identification du canal de transmission physique (PMCH) à utiliser par un terminal mobile respectif.

4. Procédé selon la revendication 3, **caractérisé par le fait que** les informations de système contiennent un code pour l'attribution des bits de l'identificateur de combinaison de format de transport (TFCI) à la première et à la deuxième partie de données.

5. Procédé selon l'une des revendications 1 à 4,
**caractérisé par le fait que** le canal physique général (S-CCPCH) est émis chronologiquement avant les canaux de transmission physiques (PMCH).

6. Procédé selon l'une des revendications 1 à 5, **caractérisé par le fait que**, dans la couche physique, les canaux de transport (FACH) associés au canal physique général (S-CCPCH) sont réunis en un premier faisceau (CCTrCH1) et les canaux de transport (MCH) associés aux canaux de transmission physiques (PMCH) sont réunis en un deuxième faisceau (CCTrCH2).
